(19) Europäisches Patentamt / European Patent Office / Office européen des brevets

(11) **EP 3 908 898 B1**

(12) **FASCICULE DE BREVET EUROPEEN**

(45) Date de publication et mention de la délivrance du brevet:
**01.03.2023 Bulletin 2023/09**

(21) Numéro de dépôt: **20705407.3**

(22) Date de dépôt: **07.01.2020**

(51) Classification Internationale des Brevets (IPC):
**G05D 23/19** *(2006.01)*   **B60H 1/00** *(2006.01)*
**F24F 11/00** *(2006.01)*

(52) Classification Coopérative des Brevets (CPC):
**G05D 23/1902; B60H 1/0073; B60H 1/00742; F24F 11/64; F24F 11/80**

(86) Numéro de dépôt international:
**PCT/FR2020/050016**

(87) Numéro de publication internationale:
**WO 2020/144428 (16.07.2020 Gazette 2020/29)**

(54) **SYSTÈME DE GESTION THERMIQUE POUR VÉHICULE AUTOMOBILE**

WÄRMEVERWALTUNGSSYSTEM FÜR EIN KRAFTFAHRZEUG

THERMAL MANAGEMENT SYSTEM FOR A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.01.2019 FR 1900120**

(43) Date de publication de la demande:
**17.11.2021 Bulletin 2021/46**

(73) Titulaire: **VALEO SYSTEMES THERMIQUES**
**78320 Le Mesnil Saint-Denis (FR)**

(72) Inventeurs:
• **NEVEU, Daniel**
**78322 LE MESNIL SAINT-DENIS CEDEX (FR)**

• **ZOUBAIRI, Omar**
**78322 LE MESNIL SAINT DENIS CEDEX (FR)**

(74) Mandataire: **Valeo Systèmes Thermiques**
**Service Propriété Intellectuelle**
**ZA l'Agiot, 8 rue Louis Lormand**
**CS 80517**
**La Verrière**
**78322 Le Mesnil-Saint-Denis Cedex (FR)**

(56) Documents cités:
**WO-A1-2016/070052     WO-A1-2016/202704**
**WO-A1-2017/041921     WO-A1-2018/202984**

**Description**

L'invention concerne un système de gestion thermique pour véhicule automobile. L'invention concerne encore un procédé de gestion thermique mis en oeuvre par un tel système de gestion thermique.

Dans un véhicule automobile, il est connu de prévoir une gestion des débits, températures et répartition de l'air soufflée par les différents aérateurs en fonction des conditions extérieures de température et d'ensoleillement. Sur certains véhicules, cela peut être combiné avec l'activation d'un volant chauffant et/ou d'un siège chauffant ou refroidissant, et parfois de surfaces chauffantes par contact tel qu'un repose coude.

La présente invention vise répondre à des attentes croissantes en matière de confort et de bien-être à bord d'un véhicule, et notamment en augmentant la capacité à s'adapter aux besoins de chaque passager.

Le système selon l'invention vise notamment à obtenir les aspects suivants.

I peut s'agir de la capacité de s'adapter au profil particulier de chaque passager, c'est-à-dire prendre en compte ses attentes ou préférences particulières, ainsi que son domaine spécifique de confort lié à son profil personnel (sexe, âge, ratio masse musculaire / graisse, etc...).

Il peut aussi s'agir de la capacité de prendre en compte chaque contexte d'usage ou d'état des passagers pouvant impacter le confort thermique: habillement, métabolisme (digestion, sport, heure...), stress, fatigue...

Il peut enfin s'agir de la capacité de prendre en compte une grande variété des échanges thermiques sur les passagers, que ce soit en nature (convection, rayonnement, contacts) ou localisation (tête, cou, torse, bras, mains, dos, cuisses, jambes, pieds).

Le confort thermique dans un habitacle automobile résulte notamment de la combinaison et des interactions entre de nombreux mécanismes thermo-physiologiques et thermiques.

Le confort thermique dépend en particulier de l'activité métabolique de la personne, c'est-à-dire de la chaleur générée par le corps du fait du fonctionnement de base de l'organisme (métabolisme basal), de son activité physique et cognitive (métabolisme d'activité), et aussi de processus métaboliques en réaction à l'environnement thermique, comme la vasoconstriction ou le frissonnement (thermogénèse).

Le confort thermique dépend également du niveau d"habillement de la personne, c'est-à-dire à la fois du taux de couverture de la peau par des habits (habituellement de l'ordre de 85%) et de la résistance thermique des habits aux transferts de chaleur.

Le confort thermique dépend également des échanges thermiques de la personne avec son environnement par convection avec l'air, par rayonnement infrarouge avec les parois en regard et par contact direct avec certains équipements, en particulier le siège et le volant. Ces échanges dépendent notamment des différentes températures d'air et de parois en regard, et des vitesses d'air au voisinage du corps.

Le confort thermique dépend également des échanges thermiques de la personne avec son environnement du fait de la respiration et du transfert d'humidité associé, ainsi que de la perspiration et sudation à travers la peau. Ces échanges dépendent de l'activité métabolique ainsi que la température et humidité de l'air.

Le confort thermique dépend également des flux solaires direct et indirects sur la personne, qu'ils soient directement absorbés par la peau ou absorbés par les vêtements. On notera qu'à la différence des échanges convectifs et radiatifs précités, le flux solaire absorbé ne dépend pas de la température du corps et des habits.

Dans un véhicule traditionnel, la température moyenne de confort dans l'habitacle est réglée par défaut pour répondre aux besoins thermiques d'une personne dite « moyenne », c'est-à-dire de corpulence moyenne, avec une activité métabolique et un habillement de référence dits « moyens ».

Dès lors que la personne est habillée de manière particulière, notamment en maillot de bain l'été et en manteau l'hiver, la consigne de température devra être modifiée pour maintenir la personne au confort.

Dès lors que la personne a une activité métabolique particulière, notamment qu'elle est endormie ou qu'elle est au contraire particulièrement stressée ou venant de courir avant d'arriver à la voiture, la consigne de température devra être là aussi modifiée pour maintenir la personne au confort.

Dès lors que la personne est de petite corpulence (poids et taille faibles) ou forte corpulence, la consigne de température devra là aussi être modifiée pour maintenir la personne au confort.

La difficulté est alors de proposer une stratégie simple et efficace d'adaptation des températures de consigne en fonction de valeurs observables de l'activité métabolique et/ou de l'habillement, combinée le cas échéant à d'autres informations connexes sur la personne, telles que sa corpulence.

L'invention vise à un meilleur contrôle et une meilleure gestion du confort thermique et bien-être à bord des véhicules automobiles.

À cet effet l'invention a pour objet un système de gestion thermique pour un habitacle de véhicule automobile, système comportant une unité de traitement agencée pour déterminer une consigne de température opérative TOC(t), dite encore température opérative de confort, à un instant donné, et utiliser cette consigne de température opérative pour gérer le confort thermique dans l'habitacle, cette consigne de température opérative TOC(t) à l'instant donné (t) étant fonction d'une valeur de température opérative de référence (TOCRef), d'une variation DeltaCORP(t) d'une valeur de corpulence CORP(t) d'une personne à l'instant (t) par rapport à une valeur de corpulence de référence, d'une variation DeltaCLO(t) d'une valeur d'habillement CLO(t) à l'instant (t) par rapport à une valeur d'habillement de référence et d'une variation DeltaMET(t) d'une valeur de l'activité du métabolisme MET(t) à l'instant (t) par rapport à une valeur d'activité du métabolisme de référence.

L'invention propose ainsi une stratégie de contrôle du confort thermique dans un habitacle automobile qui permet d'ajuster facilement, rapidement et efficacement la température de consigne (ou température opérative de confort) en fonction de la corpulence CORP, du niveau d'habillement CLO et de l'activité métabolique MET d'un passager.

L'invention part d'une situation où le système de contrôle a déjà été réglé ou calibré sur une température opérative de confort TOCRef de référence pour un certain jeu de valeurs de référence concernant la corpulence CORPRef, l'habillement CLORef et le métabolisme METRef du passager.

L'invention permet une adaptation de la température de confort au profil de l'utilisateur.

De manière très avantageuse, l'invention permet d'éviter l'utilisation d'index de confort.

Selon l'invention, la consigne de température opérative TOC(t) à l'instant donné (t) est définie par la relation suivante TOC(t) = TOCRef + A(CORP,CLO,MET) x DeltaCORP(t) + B(CORP,CLO,MET) x DeltaCLO(t) + C(CORP, CLO, MET) x DeltaMET(t) relation dans laquelle les coefficients A(CORP,CLO,MET) B(CORP,CLO,MET) C(CORP, CLO, MET) caractérisent la sensibilité de la température de consigne respectivement à une variation de la corpulence CORP(t), de l'habillement CLO(t) et du métabolisme MET(t), ces coefficients dépendant notamment de la corpulence CORP du passager et de la plage dans laquelle s'effectue la variation du CLO et du MET.

Selon un aspect de l'invention, la corpulence CORP est décrite par une fonction de la forme CORP = $(P)^{x1}$ / $(H)^{x2}$ où P est le poids et H la taille du passager, dans laquelle par exemple x1 = 1 et x2 = 1 .

Selon un aspect de l'invention, les coefficients A, B et C sont choisis constants dans différentes plages de variation de CLO et MET.

Selon un aspect de l'invention, le coefficient de sensibilité B à la variation du CLO est sélectionné dans une table qui prend N valeurs discrète, N étant préférablement égal à 9.

Selon un aspect de l'invention, le coefficient de sensibilité C à la variation du MET est sélectionné dans une table qui prend N valeurs discrètes, N étant préférablement égal à 9.

D'autres caractéristiques et avantages de l'invention apparaitront plus clairement à la lecture de la description suivante, donnée à titre d'exemple illustratif et non limitatif, et des dessins annexés parmi lesquels :

la [Figure 1] montre un schéma d'un système selon un exemple de l'invention ;
- la [Figure 2] représente des graphes d'évolution de la consigne de température opérative en fonction de différents paramètres selon l'invention.

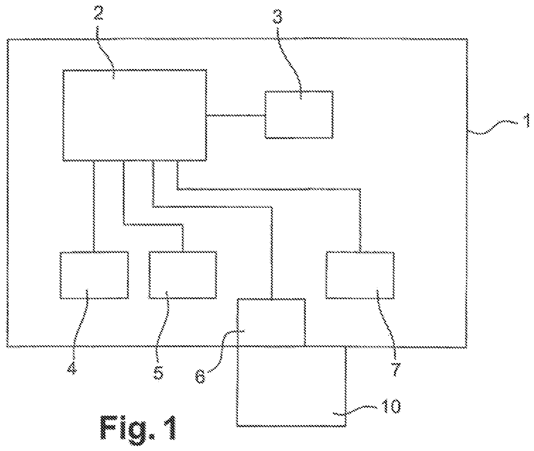

On a représenté sur la [Figure 1] un système de gestion thermique 1 pour un habitacle de véhicule automobile, système comportant une unité de traitement 2 agencé pour les opérations suivantes. L'une des opérations est d'acquérir une première donnée (CLO) représentative du niveau d'habillement d'un passager dans l'habitacle. L'une des autres opérations est d'acquérir une deuxième donnée représentative (MET) de l'activité métabolique du passager. Une dernière opération est d'acquérir une troisième donnée représentative (CORP) de la corpulence du passager.

Le système 1 comporte plusieurs capteurs agencés pour mesurer plusieurs paramètres servant à déterminer les première, deuxième et troisième données. Ces capteurs comportent notamment une caméra DMS 3 agencée pour observer un passager dans l'habitacle, un dôme 4 formé par au moins une caméra visible ou infrarouge placée sur un plafond de l'habitacle et qui permet de visualiser les passagers et mesurer les température des parois de l'habitacle et de certaines parties du corps des passagers, un capteur d'ensoleillement 5, au moins un capteur de température d'air 6 à la sortie d'un dispositif de climatisation ou de l'HVAC 10, un capteur révélateur des débits d'air et de leur répartition à la sortie d'un dispositif de climatisation ou de l'HVAC 10, au moins un capteur de température d'air 7 régnant dans l'habitacle, préférablement un capteur d'humidité et des capteurs de température disposés dans certaines parois de l'habitacle, et préférablement un capteur de flux thermique sur les zones en contact avec les passagers.

La première donnée (CLO) représentative du niveau d'habillement du passager dans l'habitacle correspond à une résistance thermique mesurée des vêtements portés par le passager.

A cet effet, le système 1 est agencé pour traiter une image prise par la caméra 3 ou dôme 4 et pour, à partir de cette image, déterminer le type de vêtements (T-shirt et/ou chemise et/ou pull et/ou veste et/ou manteau et/ou écharpe et/ou chapeau ) portés par le passager notamment par reconnaissance d'image, le système 1 étant agencé en outre pour déterminer la résistance thermique à partir du type de vêtements ainsi mesuré et, le cas échéant, à partir d'une mesure de températures des vêtements et de l'environnement du passager.

Le niveau d'habillement d'une personne est habituellement exprimé avec une unité de mesure appelée le CLO.

Par exemple une unité CLO correspond à un habillement qui procure une résistance thermique globale apparente RClog de 0.155 m2.°C/Watt, choisie de telle manière qu'avec cet habillement une personne « moyenne » assise et au repos soit au confort dans une ambiance à 21 °C en air calme avec une humidité moyenne de 50%.

EP 3 908 898 B1

Par exemple la résistance thermique apparente globale de l'habillement RClog prend en compte le fait qu'une partie (%Cloth) du corps n'est pas couverte, mais fait l'hypothèse que l'ensemble du corps est couvert par une épaisseur de vêtement uniforme.

En conséquence, la résistance thermique apparente globale RClog résulte d'une combinaison entre une résistance thermique locale effective (RCloe) des vêtements sur la partie du corps couverte (%Cloth) et d'une résistance thermique nulle sur les parties non couvertes (%Skin = 1 - %Cloth). On a par exemple la relation suivante.

$$RCloe = RClog \ / \ ( \%Cloth - \%Skin \ x \ RClog \ x \ Hext )$$

Où Hext est le coefficient d'échange global apparent par convection et rayonnement entre la surface extérieure du corps et des vêtements et l'environnement extérieur, caractérisé par sa température opérative TOpt On voit que si la personne est totalement couverte (%Clo = 1), on a RCloe = RClog.

La résistance thermique moyenne prise comme référence et comme valeur par défaut est RClog = 1 CLO.

Le taux de couverture %Cloth représente la partie du corps couverte par des vêtements exprimé en pourcentage de la surface. Par défaut et en général on a %Cltoh - 89%, dans le cas où la tête et les mains ne sont pas couvertes. Elle correspond à une tenue d'intérieure avec « pantalon + chemise + pullover fin ».

Il est proposé une classification pour couvrir 9 niveaux d'habillement typiques identifiables par capteur vidéo.

La deuxième donnée représentative (MET) de l'activité métabolique du passager est dépendante du profil (genre, âge et corpulence) , de l'activité respiratoire et du rythme cardiaque HR du passager qui est mesuré notamment par la caméra 3. Si l'activité respiratoire ou le rythme cardiaque HR ne sont pas mesurables, la deuxième donnée représentative (MET) de l'activité métabolique pourra être estimée à partir de la posture et de l'activité de la personne détectée par la caméra 3 ou le dôme 4. En particulier, elle variera selon que le passager dort, est au repos, a une activité cognitive, conduit ou est très agité.

L'activité métabolique d'une personne est mesurée par les physiologistes en kCalories / Heure / Kg corporel, ce qui est homogène à une puissance divisée par un poids. On a créé une unité de mesure du métabolisme appelée MET tel que : 1 kCal/Hr/kg = 1 MET. On peut convertir cette unité en Watts/kg : 1 Met = 1 kCal/Hr/kg = 4180joules / 3600sec. / Kg = 1.162 Watt/kg. Cette unité est telle qu'une personne « moyenne » assise au repos dissipe 1 Met.

Le fait de ramener l'activité métabolique au poids fait que des personnes de poids différents auront une activité métabolique massique METp (indice « p » car ramené au poids) proche pour une même activité. Ainsi, pour une personne au repos avec un métabolisme massique : METp = 1 Met. Son activité métabolique totale METt dépendra du poids ( METt = METp x Poids). Pour une personne de 60 kg : METt = 60 x METp = 60 x 1.16 = 70 Watts au repos. Pour une personne de 90 kg : METt = 100 x 1.16 = 116 Watts au repos.

Dans les bilans thermiques pour le confort, on ramène les échanges à la surface du corps.

On utilise alors l'activité métabolique surfacique METs (indice « s » car ramené à la surface du corps).

On aura METs = METp x (Poids du corps / Surface du corps qui échange avec l'extérieur) = METp x P / Se.

La surface Se n'est pas la surface totale St du corps mais uniquement celle qui participe aux échanges avec l'environnement, soit un pourcentage %Surf de la surface totale : Se = %Surf x St.

La surface totale du corps St peut être approché par la formule de Dubois : St = 0.20247 * Taille0.725 * Poids0.425, avec la taille en mètre et le poids en kg.

La Surface de Dubois d'une personne « moyenne » est 1.8 m2 (pour un poids de 70 kg et une taille de 1.7m).

L'activité métabolique moyenne prise comme référence et comme valeur par défaut dans un véhicule est 1.2 Met. Elle correspond à une valeur intermédiaire entre une personne au repos (1 Met) et une personne en train de conduire, c'est-à-dire avec un légère activité cognitive et physique (1.4 Met).

Il est proposé une classification pour couvrir 9 niveaux d'activité métabolique typiques identifiables par la combinaison de capteurs vidéo et de capteurs physiologiques.

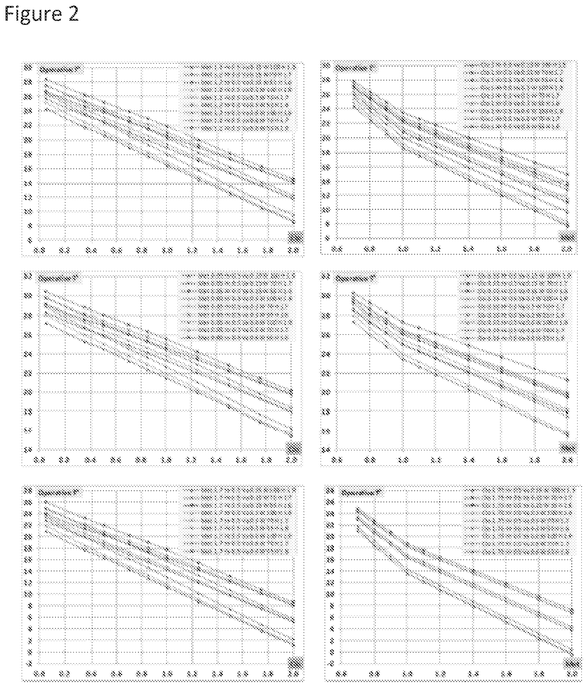

Les diagrammes représentés sur la [Figure 2] présentent l'évolution de la température opérative TOC (en ordonnée) en fonction du CLO, variant entre 0.05 et 2, du MET, variant entre 0.7 et 2, du poids W et de la taille H, avec 3 jeux typiques : W & H bas = 55 x 1.6, W & H moyen = 70 x 1.7, W & H élevé = 100 x 1.9, de l'humidité Hr, prise ici à une valeur médiane de 50%, et de la vitesse moyenne de l'air Va, variant entre 0.15 m/s (air calme) et 0.6 m/s (ventilation élevée).

Les deux premiers diagrammes montrent l'influence du CLO et du MET lorsque les valeurs associées du Met et Clo sont proche de la référence moyenne, soit Met = 1.2 et Clo = 1.

Les troisième et quatrième diagrammes montrent l'influence du CLO et MET lorsque les valeurs associées du Met et Clo sont dans une plage basse, soit Met = 0.85 et Clo = 0.35.

Les cinquième et sixième diagrammes montrent l'influence du CLO et MET lorsque les valeurs associées du Met et Clo sont dans une plage haute, soit Met = 1.7 et Clo = 1.75.

On constate que la pente est globalement linéaire et varie peu sur large plage de variation du CLO et du MET.

4

On peut approcher la pente de sensibilité par une valeur qui ne dépend que de la corpulence CORP (soit de W et H) sur 9 plages de CLO et MET.

On constate dans une plage centrale, associée aux conditions de plus forte occurrence, à savoir Met entre 1 et 4 et CLO entre 0.7 et 1.5, que la sensibilité augmente avec la corpulence, avec plus de 20% d'écart entre une personne forte et une personne mince.

On constate également dans cette plage que la sensibilité au MET est proche de 10, ce qui signifie qu'une variation de 0.1 Met sera compensée par une variation de ~1°C de la température opérative. Concrètement, entre une personne inactive au repos et une personne qui conduit, on peut avoir un écart de 0.4 Met et donc de 4° sur la température opérative de confort.

On constate également dans cette plage que la sensibilité au CLO est proche de 8, ce qui signifie qu'une variation de 0.2 Clo sera compensée par une variation d'environ 1.5 °C de la température opérative. Ainsi, entre une personne en tenue « casual » avec pantalon et chemise (Clo ~0.7) et une personne en costume 3 pièces (Clo -1.25), on peut avoir un écart de 0.6 Clo et donc de 4 à 5°C sur la température opérative de confort.

On constate par ailleurs sur l'ensemble du digramme que la sensibilité au MET augmente fortement si le CLO est élevé, la sensibilité au CLO augmente fortement si le MET est élevé et la sensibilité au MET est plus forte pour MET < 1 que pour MET > 1, principalement liée au fait que la contribution de la respiration et sudation est réduite à faible métabolisme. On remarque ainsi qu'une personne endormie (Met = 0.7 à 0.9) pourra solliciter une température de 3 à 4°C supérieure à celle une personne au repos.

## Revendications

1. Système de gestion thermique pour un habitacle de véhicule automobile, système comportant une unité de traitement agencée pour déterminer une consigne de température opérative TOC(t), dite encore température opérative de confort, à un instant donné, et utiliser cette consigne de température opérative pour gérer le confort thermique dans l'habitacle, cette consigne de température opérative TOC(t) à l'instant donné (t) étant fonction d'une valeur de température opérative de référence (TOCRef), d'une variation DeltaCORP(t) d'une valeur de corpulence CORP(t) d'une personne à l'instant (t) par rapport à une valeur de corpulence de référence, d'une variation DeltaCLO(t) d'une valeur d'habillement CLO(t) à l'instant (t) par rapport à une valeur d'habillement de référence et d'une variation DeltaMET(t) d'une valeur de l'activité du métabolisme MET(t) à l'instant (t) par rapport à une valeur d'activité du métabolisme de référence, **caractérisé en ce que** la consigne de température opérative TOC(t) à l'instant donné (t) est définie par la relation suivante TOC(t) = TOCRef + A(CORP,CLO,MET) x DeltaCORP(t) + B(CORP,CLO, MET) x DeltaCLO(t) + C(CORP, CLO, MET) x DeltaMET(t) relation dans laquelle les coefficients A(CORP,CLO, MET) B(CORP,CLO,MET) C(CORP, CLO, MET) caractérisent la sensibilité de la température de consigne respectivement à une variation de la corpulence CORP(t), l'habillement CLO(t) et du métabolisme MET(t), ces coefficients dépendant notamment de la corpulence CORP du passager et de la plage dans laquelle s'effectue la variation du CLO et du MET.

2. Système selon la revendication précédente, **caractérisé en ce que** la corpulence CORP est décrite par une fonction de la forme CORP = $(P)^{x1} / (H)^{x2}$ où P est le poids et H la taille du passager, dans laquelle par exemple x1 = 1 et x2 = 1 .

3. Système selon l'une des revendications précédentes, **caractérisé en ce que** les coefficients A, B et C sont choisis constants dans différentes plages de variation de CLO et MET.

4. Système selon l'une des revendications précédentes, **caractérisé en ce que** le coefficient de sensibilité B à la variation du CLO est sélectionné dans une table qui prend N valeurs discrète, N étant préférablement égal à 9.

5. Système selon l'une des revendications précédentes, **caractérisé en ce que** le coefficient de sensibilité C à la variation du MET est sélectionné dans une table qui prend N valeurs discrètes, N étant préférablement égal à 9.

## Patentansprüche

1. Wärmeverwaltungssystem für einen Kraftfahrzeuginnenraum, wobei das System eine Verarbeitungseinheit aufweist, die eingerichtet ist, um einen Betriebstemperatursollwert TOC(t), auch Komfortbetriebstemperatur genannt, zu einem gegebenen Zeitpunkt zu bestimmen und diesen Betriebstemperatursollwert zu verwenden, um den Wärmekomfort im Innenraum zu verwalten, wobei dieser Betriebstemperatursollwert TOC(t) zum gegebenen Zeitpunkt (t) von einem Bezugsbetriebstemperaturwert (TOCRef), von einer Änderung DeltaCORP(t) eines Staturwerts CORP(t) einer Person zum Zeitpunkt (t) bezüglich eines Bezugsstaturwerts, von einer Änderung DeltaCLO(t) eines Bekleidungswerts CLO(t) zum Zeitpunkt (t) bezüglich eines Bezugsbekleidungswerts und von einer Änderung DeltaMET(t) eines Werts der Aktivität des Stoffwechsels MET(t) zum Zeitpunkt (t) bezüglich eines Aktivitätswerts des Bezugsstoffwechsels abhängt, **dadurch gekennzeichnet, dass** der Betriebstemperatursollwert TOC(t) zum gegebenen Zeitpunkt (t) durch die folgende Beziehung TOC(t) = TOCRef + A(CORP,CLO,MET) x DeltaCORP(t) + B(CORP,CLO,MET) x DeltaCLO(t) + C(CORP,CLO,MET) x DeltaMET(t) definiert wird, Beziehung, in der die Koeffizienten A (CORP, CLO, MET) B(CORP,CLO,MET) C(CORP,CLO,MET) die Empfindlichkeit der Solltemperatur bezüglich einer Änderung der Statur CORP(t), der Bekleidung CLO(t) bzw. des Stoffwechsels MET(t) kennzeichnen, wobei diese Koeffizienten insbesondere von der Statur CORP des Insassen und dem Bereich abhängen, in dem die Änderung des CLO und des MET stattfindet.

2. System nach dem vorhergehenden Anspruch, **dadurch gekennzeichnet, dass** die Statur CORP durch eine Funktion der Form CORP = $(P)^{x1}/(H)^{x2}$ beschrieben wird, wobei P das Gewicht und H die Größe des Insassen ist, in der zum Beispiel gilt x1 = 1 und x2 = 1.

3. System nach einem der vorhergehenden Ansprüche, **dadurch gekennzeichnet, dass** die Koeffizienten A, B und C in verschiedenen Änderungsbereichen von CLO und MET konstant gewählt werden.

4. System nach einem der vorhergehenden Ansprüche, **dadurch gekennzeichnet, dass** der Empfindlichkeitskoeffizient B für die Änderung des CLO in einer Tabelle ausgewählt wird, die N diskrete Werte annimmt, wobei N vorzugsweise gleich 9 ist.

5. System nach einem der vorhergehenden Ansprüche, **dadurch gekennzeichnet, dass** der Empfindlichkeitskoeffizient C für die Änderung des MET in einer Tabelle ausgewählt wird, die N diskrete Werte annimmt, wobei N vorzugsweise gleich 9 ist.

**Claims**

1. Thermal management system for a motor vehicle passenger compartment, said system including a processing unit designed to determine an operative temperature setpoint TOC(t), also called operative comfort temperature, at a given time, and to use this operative temperature setpoint to manage thermal comfort in the passenger compartment, this operative temperature setpoint TOC(t) at the given time (t) being dependent on a reference operative temperature value (TOCRef), on a variation DeltaCORP(t) in a corpulence value CORP(t) of a person at the time (t) compared to a reference corpulence value, on a variation DeltaCLO(t) in a clothing value CLO(t) at the time (t) compared to a reference clothing value and on a variation DeltaMET(t) in a metabolism activity value MET(t) at the time (t) compared to a reference metabolism activity value, **characterized in that** the operative temperature setpoint TOC(t) at the given time (t) is defined by the following relationship: TOC(t) = TOCRef + A(CORP,CLO,MET) x DeltaCORP(t) + B(CORP,CLO,MET) x DeltaCLO(t) + C(CORP,CLO,MET) x DeltaMET(t), in which relationship the coefficients A(CORP,CLO,MET), B(CORP,CLO,MET) and C(CORP,CLO,MET) characterize the sensitivity of the setpoint temperature to a variation in the corpulence CORP(t), the clothing CLO(t) and the metabolism MET(t), respectively, these coefficients being dependent in particular on the corpulence CORP of the passenger and on the range in which the CLO and the MET vary.

2. System according to the preceding claim, **characterized in that** the corpulence CORP is described by a function in the form CORP = $(P)^{x1} / (H)^{x2}$, where P is the weight and H the height of the passenger, in which for example x1 = 1 and x2 = 1.

3. System according to either of the preceding claims, **characterized in that** the coefficients A, B and C are chosen to be constant in various ranges of variation of CLO and MET.

4. System according to one of the preceding claims, **characterized in that** the coefficient of sensitivity B to the variation in the CLO is selected from a table that takes N discrete values, N preferably being equal to 9.

5. System according to one of the preceding claims, **characterized in that** the coefficient of sensitivity C to the variation in the MET is selected from a table that takes N discrete values, N preferably being equal to 9.

Fig. 1

Figure 2